# EUROPÄISCHE PATENTSCHRIFT

(11) **EP 1 661 699 B1**
(45) Veröffentlichungstag und Bekanntmachung des Hinweises auf die Patenterteilung: **21.03.2007**
(21) Anmeldenummer: 04028077.8
(22) Anmeldetag: 26.11.2004
(51) Int. Cl.: B41F 17/22, B41F 15/08, B65G 47/51

(54) **Anlage zum Bedrucken oder sonstigen Dekorieren von Hohlkörpern**
Device for printing or decorating of hollow objects
Dispositif d'impression ou de décoration de produits creux

(43) Veröffentlichungstag der Anmeldung: 31.05.2006
(73) Patentinhaber: HINTERKOPF GmbH, 73054 Eislingen/Fils (DE)
(72) Erfinder: Aichele, Helmut, Dipl.-Ing., 73033 Göppingen (DE); Schulz, Josef, Dipl.-Ing., 73342 Bad Ditzenbach-Gosbach (DE)
(74) Vertreter: Abel, Martin

(56) Entgegenhaltungen:
- EP-A- 1 468 827
- CH-A- 320 352
- DE-U1- 20 012 523
- FR-A- 2 748 454
- US-A- 5 657 690

## Beschreibung

Die vorliegende Erfindung betrifft allgemein den Sektor der Anlagen, die zum Bedrucken oder sonstigen Dekorieren von über eine runde Außenkontur verfügenden Hohlkörpern wie Hülsen, Tuben, Dosen oder dergleichen einsetzbar sind. Unter dem Begriff "Dekorieren" sind beispielsweise auch Maßnahmen zum Lackieren, Etikettieren oder Folienprägen zu verstehen. Als Vertreter dieser Anlagengattungen können beispielsweise die in der EP 1 138 484 A2, der EP 1 132 207 A1 und der EP 1 468 827 A1 beschriebenen Anlagen exemplarisch genannt werden. Dabei befasst sich die EP 1 468 827 A1 mit einer für den Siebdruck von Hohlkörpern ausgelegten Druckmaschine.

Ungeachtet der Tatsache, dass in solchen Anlagen zusätzlich zu Dekorationsarbeiten teils auch noch andere Arbeitsvorgänge an den Hohlkörpern ausgeführt werden können, werden solche Anlagen in der vorliegenden Patentanmeldung allgemein als "Dekorationsanlagen" bezeichnet.

Eine aus der FR-A-2748454 bekannte Dekorationsanlage gemäß dem Oberbegriff des Patentanspruches 1 ist ausgelegt, um an Hohlkörpern nacheinander unterschiedliche Bearbeitungsvorgänge auszuführen. Zu diesem Zwecke enthält die Dekorationsanlage entsprechend konzipierte Arbeitsstationen, die üblicherweise in einer Linie angeordnet sind und durch die die Hohlkörper mittels einer Transportkettenanordnung nacheinander hindurchgeschleust werden. Die Transportkettenanordnung verfügt über eine in sich geschlossene, im Betrieb eine unidirektionale Umlaufbewegung um entsprechend platzierte Umlenkräder ausführende Transportkette, die mit in Transportrichtung beabstandeten Hohlkörperträgern ausgestattet ist, an denen die zu transportierenden Hohlkörper lösbar aufgehängt sind. In der Regel werden die Hohlkörper in den einzelnen Arbeitsstationen vorübergehend von der Transportkette abgenommen, um nach der Bearbeitung an anderer Stelle der Transportkette wieder an diese zurückgegeben zu werden, wobei die Transportkette die Hohlkörper letztlich zu einem sogenannten Produktauslauf verbringt, wo sie aus der Dekorationsanlage herausgeschleust werden.

Im Betrieb der Dekorationsanlage werden die einzelnen Arbeitsstationen von der Transportkette bisher in einer dem jeweiligen Maschinenkonzept entsprechenden festen Reihenfolge durchlaufen. Beispielsweise durchlaufen die Hohlkörper dadurch nacheinander eine Offsetdruckstation, eine Siebdruckstation und eine Lackierstation. In einer anderen Anlage kann die Reihenfolge so gewählt sein, dass der Siebdruck und der Offsetdruck vertauscht sind. Soll in einer vorhandenen Arbeitsstation einmal keine Bearbeitung vorgenommen werden, werden die Hohlkörper gleichwohl durch diese Arbeitsstation hindurchgeschleust, die dann allerdings hinsichtlich ihres eigentlichen Bearbeitungszweckes stillgelegt ist.

Ersichtlich sind die einzelnen Anlagen auf den jeweiligen Anwendungsfall speziell zugeschnitten. Änderungen in der zur Verfügung gestellten Bearbeitungsreihenfolge sind dabei nicht möglich. Es bedarf deshalb für die unterschiedlichen Anwendungsfälle jeweils gesonderter Dekorationsanlagen mit einem entsprechend hohen finanziellen Aufwand und Platzbedarf.

Es ist die Aufgabe der vorliegenden Erfindung, Maßnahmen vorzuschlagen, die eine flexiblere Behandlung von Hohlkörpern in einer Dekorationsanlage ermöglichen.

Zur Lösung dieser Aufgabe ist eine Anlage zum Bedrucken und/oder sonstigen Dekorieren von Hohlkörpern, Tuben, Dosen oder dergleichen vorgesehen, die mehrere Arbeitsstationen unterschiedlichen Typs aufweist, die ausgebildet sind, um an ihnen zugeführten Hohlkörpern unterschiedliche Bearbeitungsvorgänge auszuführen, und mit einer die einzelnen Arbeitsstationen erfassenden, für den Transport von Hohlkörpern ausgelegten Transportkettenanordnung, die aus mehreren in der Anlage angeordneten Transportkettenabschnitten besteht, wobei die Transportkettenanordnung Kupplungsmittel umfasst, durch die die Transportkettenabschnitte zu einer in sich geschlossenen und im Betrieb eine Umlaufbewegung ausführenden Transportkette mit alternativ unterschiedlichen Verläufen verknüpfbar sind, in denen die Arbeitstationen von der Transportkette in unterschiedlicher Reihenfolge und/oder teilweise überhaupt nicht durchlaufen werden.

Auf diese Weise lässt sich die Bearbeitungsreihenfolge der Hohlkörper innerhalb ein und derselben Anlage frei wählen. Die dazu erforderliche Umrüstung kann bei in der Anlage verbleibender Transportkettenanordnung vorgenommen werden und ist daher relativ schnell durchführbar. Bei Bedarf kann auch eine nicht benötigte Arbeitsstation aus dem Verlauf der Transportkette herausgenommen werden, sodass ein die nicht benötigte Arbeitsstation durchsetzender Transportkettenabschnitt verbleibt, der von der Transportkette abgekoppelt und stillgelegt ist. Dies ermöglicht eine höhere Bearbeitungsgeschwindigkeit verglichen mit Fällen, in denen die Hohlkörper durch eine nicht aktive Arbeitsstation hindurchgeschleust werden müssen. Die Flexibilität der Anlage ist insgesamt darin begründet, dass die Transportkettenanordnung in mehrere Transportkettenabschnitte eingeteilt ist, die sich durch Kupplungsmittel unterschiedlich miteinander verknüpfen lassen, woraus beim Umlauf der Transportkette unterschiedliche Durchlaufreihenfolgen bezüglich der Arbeitsstationen realisierbar sind oder gar ein oder mehrere Arbeitsstationen vom Durchlauf der Transportkette vollständig abkoppelbar sind. Die Transportkettenanordnung insgesamt bleibt zweckmäßigerweise unabhängig vom gewählten Kettenverlauf der Transportkette unverändert erhalten, sodass, abgesehen von eventuell den einen oder anderen Kupplungsmitteln, weder ein Transportkettenabschnitt hinzugefügt noch entnommen werden muss. Auch die sonstige technische Ausstattung, beispielsweise die vorhandenen Umlenkräder, kann beibehalten werden. Das Umrüsten hinsichtlich eines anderen Kettenverlaufes geschieht einfach durch Auftrennen der Transportkette im Bereich der Kupplungsmittel und durch eine veränderte Verknüpfung der vorhandenen Transportkettenabschnitte. Ist eine Anlage beispielsweise mit einer Siebdruckstation und einer Offsetdruckstation ausgestattet, kann eine Variierung des Verlaufes der Transportkette insbesondere derart erfolgen, dass beim einen Verlauf die Offsetdruckstation vor der Siebdruckstation und beim anderen Verlauf die Siebdruckstation vor der Offsetdruckstation durchlaufen wird. Man ist also sehr flexibel mit ein und derselben Anlage und erspart sich teuere Mehrfachanschaffungen.

Unter dem Begriff "Anlage" sind vorliegend unter anderem sowohl Anordnungen zu verstehen, bei denen die einzelnen Arbeitsstationen als individuelle maschinelle Einheiten ausgeführt sind, als auch Maschinen, bei denen die einzelnen Arbeitsstationen beispielsweise integriert sind.

Vorteilhafte Weiterbildungen der Erfindung gehen aus den Unteransprüchen hervor.

Für die Halterung und den Transport der einzelnen Hohlkörper enthält die Transportkettenanordnung zweckmäßigerweise einen sich aus einer Vielzahl von gelenkig miteinander verbundenen Kettengliedern zusammensetzenden Kettenstrang mit darin in Stranglängsrichtung verteilt angeordneten Hohlkörperträgern, die eine lösbare Bestückung mit den zu bearbeitenden Hohlkörpern ermöglichen. Die Längsachsen der an den Hohlkörperträgern sitzenden Hohlkörper sind zweckmäßigerweise horizontal oder bezüglich der Horizontalen leicht geneigt ausgerichtet. Zweckmäßigerweise beinhalten die Hohlkörperträger vom Kettenstrang wegragende Stabstrukturen, vorzugsweise mit mindestens einem Trägerstab.

Als Kupplungsmittel können übliche Kettenschlösser eingesetzt werden, die auch heute schon standardmäßig verwendet werden, um eine Transportkette nach der Installation in der Anlage an ihren offenen Enden lösbar zu schließen.

Um besonders flexibel im jeweils realisierbaren Bahnverlauf zu sein, verfügt die Transportkettenanordnung zweckmäßigerweise über mehrere sich kreuzend unter horizontalem Versatz aneinander vorbeigeführte Ketten-Längenabschnitte. Man könnte hier sagen, dass die sich kreuzenden Ketten-Längenabschnitte in unterschiedlichen Ebenen aneinander vorbeilaufen.

Normalerweise wird man bestrebt sein, die vorhandenen Arbeitsstationen so anzuordnen, dass sie in einer Linie liegen und durch einen Hauptbestandteil der Transportkettenanordnung erfassbar sind, der in einer aufrechten Hauptebene verläuft, die zum Erhalt einer stabilen Lage der daran hängenden Hohlkörper zweckmäßigerweise gegenüber der Vertikalen leicht geneigt ist. Um einen sich kreuzenden Transportkettenverlauf zu ermöglichen, enthält die Transportkettenanordnung dann zweckmäßigerweise auch noch einen oder mehrere Umgehungsbestandteile, die durch geeignete Führungsmittel aus der Hauptebene herausgeleitet werden, um ein Stück weit neben der Hauptebene verlaufen. Es können auf diese Weise mehrere quer zur Hauptebene versetzt zueinander verlaufende Umgehungsbestandteile der Transportkettenanordnung realisiert werden, wobei sich die Anzahl an der Anzahl der variabel miteinander verknüpfbaren Arbeitsstationen orientiert. Die Summe an Hauptbestandteilen und Umgehungsbestandteilen entspricht zweckmäßigerweise der Gesamtanzahl an variabel beschickungsmäßig miteinander verknüpfbaren Arbeitsstationen.

Verfügt die Transportkettenanordnung über mehrere Umgehungsbestandteile, können diese auf der gleichen Seite der Hauptebene angeordnet sein, und zwar bei Bedarf auch in einer relativ zueinander versetzten Anordnung. Gleichfalls ist es möglich, zu beiden Seiten der Hauptebene jeweils mindestens einen Umgehungsbestandteil vorzusehen.

Die Transportkettenanordnung ist zweckmäßigerweise so ausgebildet, dass bei mindestens einem Kettenverlauf der Transportkette sämtliche vorhandenen Transportkettenabschnitte zur Bildung der Transportkette miteinander verknüpft sind. Es verbleibt dann kein abgekoppelter, stillstehender Transportkettenabschnitt.

Bei mindestens einem Verlauf der Transportkette können zweckmäßigerweise ein oder mehrere Transportkettenabschnitte von der Transportkette abgekoppelt und unter Verbleib in der Anlage bzw. an der Maschine betriebsmäßig stillgelegt sein. Um welche(n) Transportkettenabschnitt(e) es sich dabei handelt, richtet sich nach der gewünschten Verkettung der Arbeitsstationen.

Um die Umrüstung hinsichtlich eines anderen Kettenverlaufes vornehmen zu können, ist die Transportkette zweckmäßigerweise in mindesten eine spezielle Umrüstposition verfahrbar. Dort kommen dann die Endbereiche mehrerer Transportkettenabschnitte so zu liegen, dass nach dem Öffnen zugeordneter Kupplungsmittel eine Verlagerung von Endbereichen der Transportkettenabschnitte in einer Weise möglich ist, dass bisher nicht gekuppelte Endbereiche einander zugeordnet sind und durch Kupplungsmittel zum Erhalt eines anderen Kettenverlaufes miteinander verbunden werden können. Das Entkuppeln, das Lageverändern und das neuerliche Kuppeln von Transportkettenabschnitten lässt sich beispielsweise manuell sehr einfach durchführen.

Die Umrüstung auf einen anderen Kettenverlauf ist in der Regel nur möglich, wenn die einzelnen Transportkettenabschnitte unter Berücksichtigung des spezifischen, durch Umlenkräder vorgegebenen Verlaufes, eine bestimmte Zuordnung zueinander eingegangen sind. Um diese Zuordnung reproduzierbar auf einfache Weise auffinden zu können, ist die Transportkettenanordnung zweckmäßigerweise mit mindestens einer Markierung versehen, die eine bestimmte Arbeitsposition einnimmt, wenn sich die Transportkette in der Umrüstposition befindet. Das Erreichen der Arbeitsposition kann beispielsweise durch geeignete Sensormittel abgetastet werden.

Vorzugsweise ist die Anordnung so getroffen, dass in einer einzigen Umrüstposition sämtliche Umrüstungsvarianten in jeder beliebigen Reihenfolge abgewickelt werden können. Es ist allerdings auch möglich, für das Umrüsten unterschiedliche Umrüstpositionen vorzusehen.

Die Markierung befindet sich zweckmäßigerweise an einem Transportkettenabschnitt, der bei jedem eingestellten Kettenverlauf der Transportkette zu der Transportkette gehört, von dieser also nie abgekoppelt ist.

Das Umrüsten auf einen anderen Kettenverlauf wird erleichtert, wenn der Transportkettenanordnung mehrere Kettenhalter zugeordnet sind, durch die die relevanten Transportkettenabschnitte während der Umrüstmaßnahmen unverfahrbar festgesetzt werden können. Es kann auf diese Weise unter anderem verhindert werden, dass sich ein Transportkettenabschnitt in Folge seiner Gewichtskraft von einer ungebremsten Umlenkrolle selbsttätig abwickelt und nach unten fällt. Durch die Kettenhalter kann auch ein stillgesetzter Transportkettenabschnitt maschinenfest fixiert werden, sodass er selbst bei Erschütterungen seine abgekoppelte Position unverändert beibehält und für die nächste Umrüstaktion an Ort und Stelle zur Verfügung steht.

Die Kettenhalter können formschlüssig in die Kettenglieder eingreifen. Bevorzugt sind sie zur klemmenden Beaufschlagung des festzusetzenden Transportkettenabschnittes ausgebildet.

Im Betrieb bedarf es in der Regel einer gewissen Vorspannung der Transportkette. Diese Vorspannung kann zweckmäßigerweise während der Umrüstphase reduziert werden. Dies ermöglicht eine einfache Handhabung der Kupplungsmittel mit geringem Kraftaufwand. Zum Erhalt der variablen Vorspannung ist die Anlage zweckmäßigerweise mit geeigneten Kettenspannmitteln ausgerüstet.

Nachfolgend wird die Erfindung anhand der beiliegenden Zeichnungen näher erläutert. Es zeigen im Einzelnen:
- Figur 1: eine schematische Seitenansicht einer erfindungsgemäßen maschinellen Anlage in bevorzugter Ausstat- tung, wobei als Arbeitsstationen eine Siebdruckstation "SS", eine Offsetdruckstation "OS" und eine Lackierstation "LS" vorgesehen sind, wobei die Transportkettenanordnung zu einer Transportkette eines als "Variante A" bezeichneten Kettenverlaufes zusammengesetzt ist,
- Figur 2: einen realistischen Ausschnitt der in Figur 1 gezeigten Anlage im Bereich der Umrüstzone, in der die zum Umrüsten des Kettenverlaufes erforderlichen Manipulationen ausgeführt werden,
- Figur 3: eine Stirnansicht der Anlage aus Figuren 1 und 2 mit Blickrichtung gemäß Pfeil III, das Ganze stark schematisiert und konzentriert auf die Transportkettenanordnung,
- Figuren 4 bis 6: in einer der Figur 1 entsprechenden Darstellungsweise verschiedene durch Umrüstung der Transportkettenanordnung erzielbare Verläufe der Transportkette (Varianten B, C, D)
- Figur 7: eine vergrößerte Einzeldarstellung der Umrüstzone, wobei exemplarisch die Maßnahmen zur Umrüstung der Transportkette von Variante "A" auf Variante "B" angedeutet sind,
- Figur 8: in einer der Figur 7 entsprechenden Darstellungsweise die Maßnahmen zur Umrüstung von Variante "A" auf Variante "C",
- Figur 9: in vergleichbarer Darstellungsweise die Maßnahmen zur Umrüstung von Variante "C" auf Variante "B",
- Figur 10: eine Stirnansicht mit Blick analog Pfeil III aus Figur 1 einer weiteren Ausführungsform der erfindungsgemäßen Anlage, bei der die Transportkettenanordnung beidseits einer Hauptebene liegende Umgehungsbestandteile aufweist, und
- Figur 11: die Anordnung aus Figur 10 in einer auf die Umrüstzone konzentrierten schematischen Vorderansicht.

Die in der Zeichnung insgesamt mit Bezugsziffer 10 versehene Dekorationsanlage ist konzipiert, um einen runden Querschnitt aufweisende Hohlkörper 20 am Außenumfang dekorieren zu können. Bei diesen Hohlkörpern 20 handelt es sich beispielsweise um Hülsen, Tuben oder Dosen. Diese dienen im fertiggestellten Zustand beispielsweise zur Aufnahme von Kosmetika oder Getränken.

Die Anlage 10 des Ausführungsbeispiels ermöglicht als Dekorierungsmaßnahmen ein Bedrucken mittels Siebdruck und/oder Offsetdruck sowie ein Lackieren der Hohlkörper 20. Diese Aufzählung ist allerdings als rein exemplarisch zu verstehen. Alternativ oder zusätzlich können noch weitere Dekoriermaßnahmen in die Anlage 10 integriert sein, beispielsweise zur Ausführung von Etikettiervorgängen und/oder von Prägevorgängen.

Es besteht auch die Möglichkeit, die Anlage 10 so auszurüsten, dass neben den beschriebenen, sich auf das Dekorieren beziehenden Bearbeitungsmöglichkeiten noch andere Bearbeitungsmöglichkeiten durchgeführt werden können, beispielsweise solche, die sich auf die Formgebung der Hohlkörper 20 und/oder auf das Aufbringen eines Verschlusses beziehen.

Für die einzelnen Bearbeitungsvorgänge ist die Anlage 10 mit entsprechenden Arbeitsstationen 4 ausgestattet, die zweckmäßigerweise in einer linearen Reihe, also in Linie, platziert sind. Der Reihe von Arbeitsstationen 4 vorgelagert ist eine Produkt-Einlaufstation 5, während eine Produkt-Auslaufstation 6 nachgeordnet ist.

An der Produkt-Einlaufstation 5 werden zu bearbeitenden Hohlkörper 20 in die Anlage 10 eingeführt. In der Produkt-Auslaufstation 6 erfolgt die Ausgabe der Hohlkörper 20 nach Abschluss der Bearbeitungsmaßnahmen. Zum Zuführen und Abführen sind durch Pfeile angedeutete Fördereinrichtungen 7 mit der Produkt-Einlaufstation 5 bzw. der Produkt-Auslaufstation 6 verkettet.

Beim Ausführungsbeispiel sind zwischen der Produkt-Einlaufstation 5 und der Produkt-Auslaufstation 6 drei Arbeitsstationen 4 vorgesehen, bei denen es sich um eine an die Produkt-Einlaufstation 5 anschließende Siebdruckstation "SS", eine sich daran anschließende Offsetdruckstation "OS" und eine sich daran anschließende, der Produkt-Auslaufstation 6 vorgeordnete Lackierstation "LS" handelt.

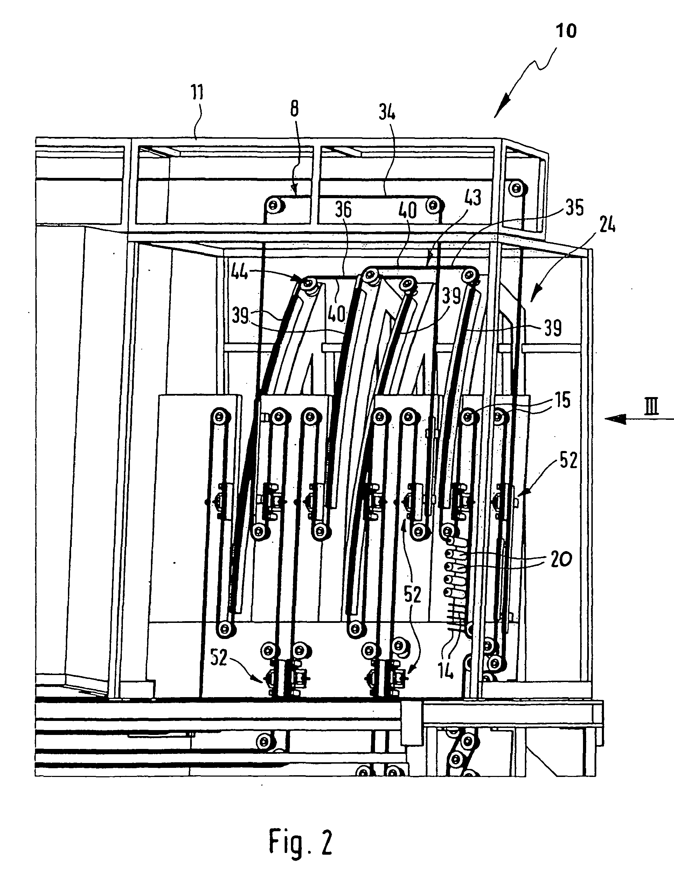

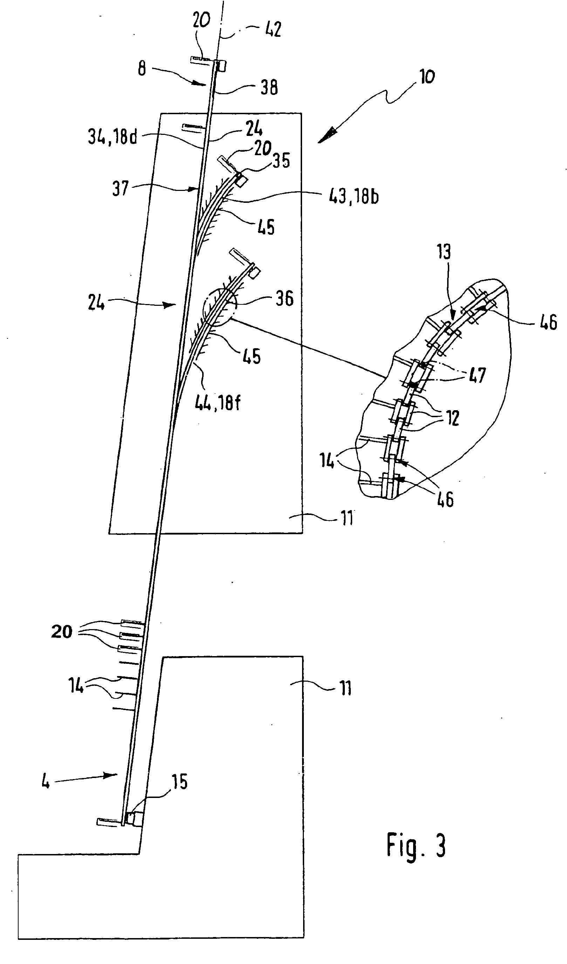

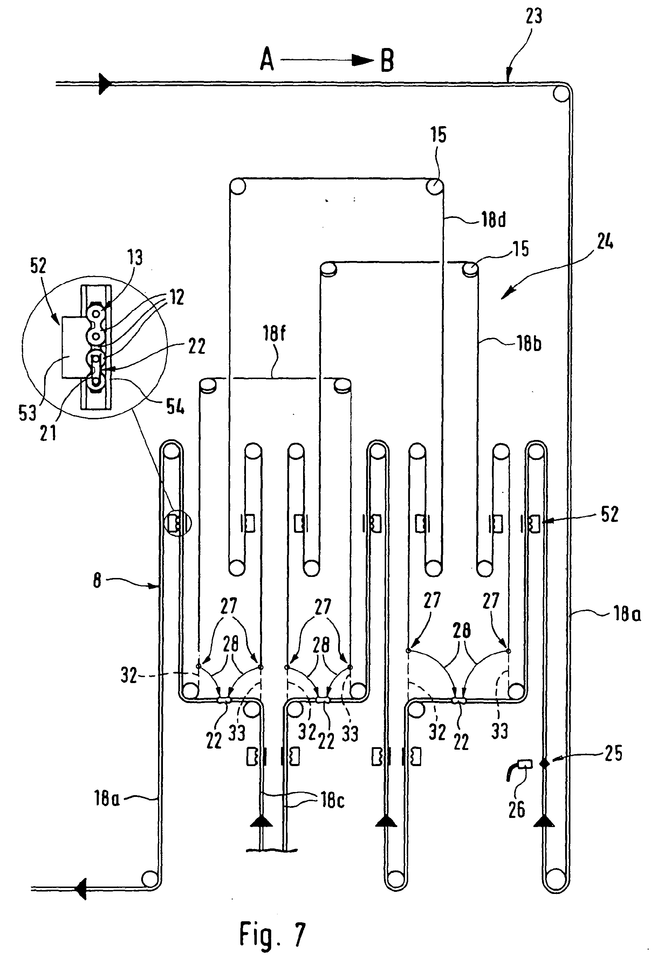

Durch die Anlage 10 hindurch zieht sich eine in ihrer Gesamtheit mit Bezugsziffer 8 versehene Transportkettenanordnung. Wie in den Ausschnittsvergrößerungen der Figuren 3 und 7 ersichtlich, beinhaltet die Transportkettenanordnung 8 einen sich aus einer Vielzahl von gelenkig miteinander verbundenen Kettengliedern 12 zusammensetzenden Kettenstrang 13, der gemäß Figuren 2 und 3 eine Vielzahl von Hohlkörperträgern 14 aufweist, die jeweils geeignet sind, einen zu transportierenden Hohlkörper 20 zu tragen.

Die Hohlkörperträger 14 sind in gleichmäßigen Abständen in der Stranglängsrichtung verteilt angeordnet. Sie beinhalten zweckmäßigerweise jeweils eine vom Kettenstrang 13 wegragende Stabstruktur, auf die der zu transportierende Hohlkörper 20 leicht abziehbar aufgesteckt ist. Im einfachsten Fall enthält jeder Hohlkörperträger 14 einen einzigen Trägerstab, der quer zur Vertikalen ausgerichtet ist.

Der besseren Übersichtlichkeit wegen sind in der Zeichnung die Hohlkörperträger 14 und die Hohlkörper 20 nur partiell abgebildet. In der Praxis ist der Kettenstrang 13 über seine gesamte Länge hinweg mit Hohlkörperträgern 14 bestückt.

Die Transportkettenanordnung 8 ist um eine Vielzahl von Umlenkrädern 15 herumgeschlungen, deren Verteilung den Längsverlauf der Transportkettenanordnung 8 bestimmt und die am Anlagengestell 11 drehbar gelagert sind. Die Umlenkräder 15 sind wenigstens teilweise elektromotorisch angetrieben und können eine Antriebskraft auf die Transportkettenanordnung 8 ausüben, um eine um die Umlenkräder 15 umlaufende unidirektionale Transportbewegung 16 hervorzurufen. In der Regel sind die Umlenkräder 15 als verzahnte Kettenräder ausgebildet.

Der Verlauf der Transportkettenanordnung 8 ist so gewählt, dass sie sowohl die Produkt-Einlaufstation 5 und die Produkt-Auslaufstation 6 als auch sämtliche Arbeitsstationen 4 erfasst. Mit anderen Worten erstreckt sich die Transportkettenanordnung 8 durch sämtliche dieser Stationen hindurch oder mit einem notwendigen Abstand daran vorbei. In der Produkt-Einlaufstation 5 wird die Transportkettenanordnung 8 mit zu bearbeitenden Hohlkörpern 20 bestückt, die sie nach der Bearbeitung in der Produkt-Auslaufstation 6 wieder abgibt.

Die Transportkettenanordnung 8 durchläuft beim Ausführungsbeispiel auch noch einen schematisch angedeuteten Trockner 17, in dem die bedruckten und/oder lackierten Hohlkörper 20 vor der an der Produkt-Auslaufstation 6 erfolgenden Ausgabe getrocknet werden. Innerhalb des Trockners 17 verläuft die Transportkettenanordnung 8 zweckmäßigerweise mäanderförmig, um eine hohe Befülldichte zu ermöglichen. Die Abbildung ist insofern stark vereinfacht.

Die Transportkettenanordnung 8 ist in einzelne Transportkettenabschnitte 18a-18f unterteilt, die durch Kupplungsmittel 22 lösbar miteinander verbindbar sind, sodass sich eine in sich geschlossene Transportkette 23 ergibt, welche sich aus über Kupplungsmittel 22 miteinander verknüpften Transportkettenabschnitten 18 zusammensetzt. Es ist dann konkret diese in sich geschlossene Transportkette 23, die im Betrieb der Anlage die Transportbewegung 16 als Umlaufbewegung um die zugeordneten Umlenkräder 15 ausführt.

Ein besonderer Vorteil der Anlage 10 liegt darin, dass die Transportkettenanordnung 18a-18f unter Belassung an der Maschine verschieden verknüpfbar sind, um alternativ unterschiedliche Verläufe der Transportkette 23 zu erhalten. Auf diese Weise lässt sich die Reihenfolge, in der die Arbeitsstationen 4 von der die Transportbewegung 16 ausführenden Transportkette 23 durchlaufen werden, variieren. Außerdem kann ein dahingehender Verlauf der Transportkette 23 erzielt werden, dass mindestens eine der Arbeitsstationen 4 von der in sich geschlossenen Transportkette 23 überhaupt nicht durchlaufen wird. Man hat mithin die Möglichkeit einer beliebigen Auswahl der Bearbeitungsart und der Bearbeitungsreihenfolge der durch die Anlage 10 hindurchgeschleusten Hohlkörper 20. Ein und dieselbe Anlage 10 erlaubt somit eine äußerst variable Behandlung von Hohlkörpern 20.

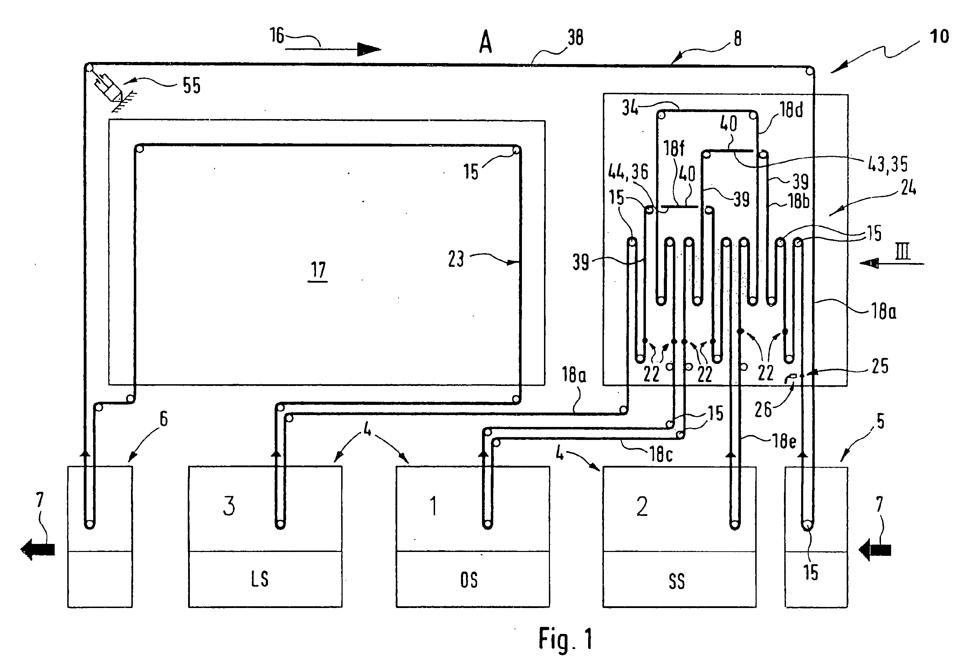

Die Figur 1 zeigt eine als Variante "A" bezeichnete Kettenverknüpfung, bei der sämtliche Transportkettenabschnitte 18a bis 18f der Transportkettenanordnung 8 über Kupplungsmittel 22 miteinander verknüpft sind. Alle vorhandenen Transportkettenabschnitte 18a-18f tragen also zur Bildung der Transportkette 23 bei. Gemäß der abgebildeten Verknüpfungsreihenfolge durchlaufen die über die Produkt-Einlaufstation 5 eingespeisten Hohlkörper 20 zunächst die Offsetdruckstation "OS", dann die Siebdruckstation "SS" und daran anschließend die Lackierstation "LS", bevor das Durchlaufen des Trockners 17 stattfindet.

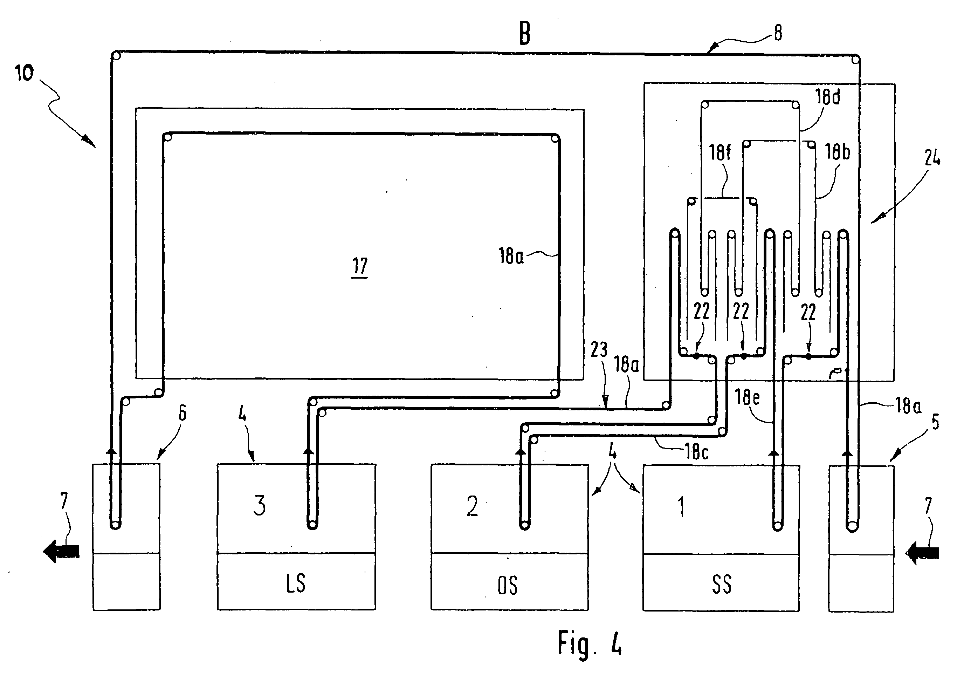

Bei der in Figur 4 gezeigten Verknüpfungsvariante "B" sind die Transportkettenabschnitte 18b, 18d, 18f, nicht in die Transportkette 23 integriert. Sie sind abgekoppelt und stehen im Betrieb der Anlage 10 still. Die Transportkette 23 setzt sich somit nurmehr aus den verbleibenden Transportkettenabschnitten 18a, 18c und 18e zusammen, was beim Ausführungsbeispiel zur Folge hat, dass gegenüber der Variante "A" die Durchlaufreihenfolge der Siebdruckstation "SS" und der Offsetdruckstation "OS" vertauscht ist.

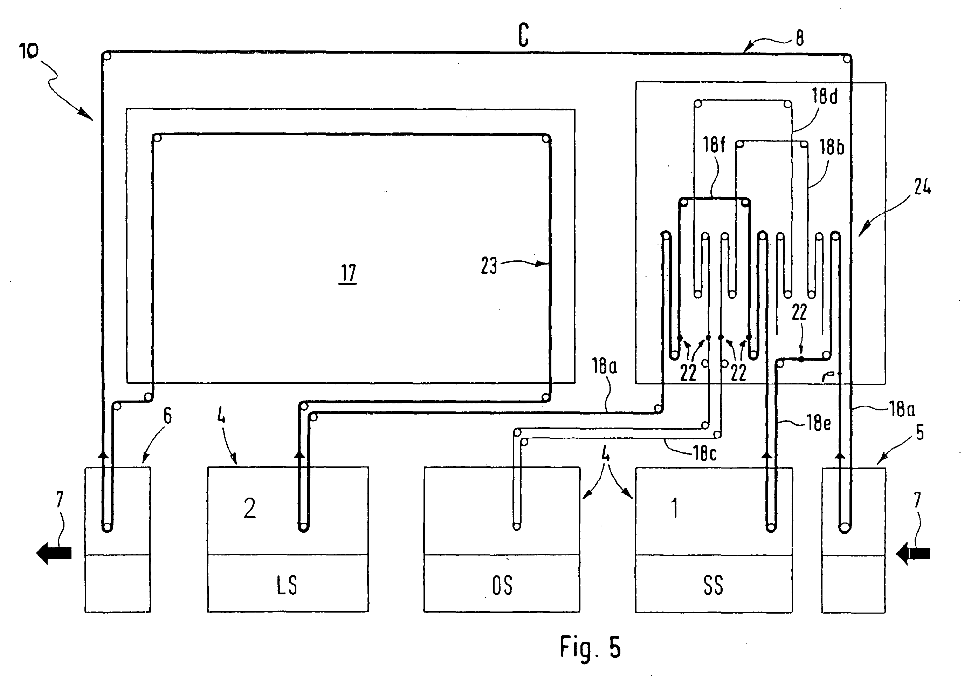

Bei der in Figur 5 gezeigten Variante "C" sind die Transportkettenabschnitte 18b, 18c und 18d isoliert und lediglich die verbleibenden Transportkettenabschnitte 18a, 18e und 18f sind zur Bildung der Transportkette 23 miteinander verknüpft. Da hier unter anderem der der Offsetdruckstation "OS" zugeordnete Transportkettenabschnitt 18c deaktiviert ist, ist folglich die komplette Offsetdruckstation "OS" stillgesetzt. Die Hohlkörper 20 durchlaufen bei der Umlaufbewegung der Transportkette 23 von den Arbeitsstationen 4 lediglich die Siebdruckstation "SS" und die Lackierstation "LS", unter Umgehung der Offsetdruckstation "OS".

Bei der ebenfalls noch illustrierten Variante "D" ist die Siebdruckstation "SS" stillgesetzt und die Hohlkörper 20 durchlaufen von den Arbeitsstationen 4 lediglich die Offsetdruckstation "OS" und die Lackierstation "LS". Hier sind die Transportkettenabschnitte 18a, 18b und 18c zu der Transportkette 23 verknüpft. Hingegen sind die restlichen Transportkettenabschnitte, einschließlich des der Siebdruckstation "SS" zugeordneten Transportkettenabschnittes 18e, abgekoppelt und stillgesetzt.

Die abgekoppelten und stillgesetzten Transportkettenabschnitte verbleiben bei jeder Variante in der Anlage installiert. Es findet keine Entnahme und erneute Installation bei Wiedergebrauch statt.

In den die Varianten "A" bis "D" illustrierenden Abbildungen ist die Durchlaufreihenfolge der einzelnen Arbeitsstationen 4 durch die Ziffern "1", "2" und ggf. "3" deutlich gemacht.

Unabhängig vom realisierten Kettenverlauf der Transportkette 23 werden bei der Umrüstung der Anlage 10 weder Transportkettenabschnitte zugefügt, noch Transportkettenabschnitte aus der Anlage entfernt. Lediglich Bestandteile der Kupplungsmittel können zeitweilig entnommen werden, wenn der eine oder andere Transportkettenabschnitt stillgesetzt ist. Dies orientiert sich jedoch an der Ausgestaltung der Kupplungsmittel 22.

Beim Ausführungsbeispiel sind als Kupplungsmittel 22 übliche, sogenannte Kettenschlösser vorgesehen. Ein solches ist in der Ausschnittsvergrößerung der Figur 7 angedeutet. Es handelt sich hier um zwei durch die End-Kettenglieder zweier zu verknüpfender Transportkettenabschnitte hindurchsteckbare Bolzen, die einenends durch eine Lasche fest miteinander verbunden sind und die im eingesteckten Zustand durch eine Klammer 21 gesichert werden.

Bei Bedarf können auch anders ausgebildete Kupplungsmittel 22 eingesetzt werden.

Das Umrüsten der Transportkette 23 auf einen anderen Kettenverlauf geschieht zweckmäßigerweise stets in Verbindung mit einer Positionierung der vorhandenen Kupplungsmittel 22 in einer spezifischen Umrüstzone 24 der Anlage 10. Die potentiellen Kupplungsstellen 27 sind somit in dieser Umrüstzone 24 zusammengefasst, was eine einfache Handhabung gestattet. Die dabei von der Transportkette 23 eingenommene Position kann als Umrüstposition bezeichnet werden.

Bevorzugt ist die Umrüstposition der Transportkette 23 unabhängig von der vorzunehmenden Umrüstung, d.h. dem einzustellenden Kettenverlauf, konstant. Dies vereinfacht die Anlagensteuerung, weil die Transportkette 23 stets lediglich in eine ganz bestimmte Position verfahren werden muss, um die notwendigen Manipulationen vornehmen zu können.

Die reproduzierbare Positionierung in der Umrüstposition wird beim Ausführungsbeispiel dadurch erleichtert, dass die Transportkette 23 eine Markierung 25 aufweist, die für jede Umrüstung lediglich erneut in einer vorbestimmten Arbeitsposition positioniert werden muss. Um ein präzises Auffinden der Arbeitsposition zu ermöglichen, sind dort beim Ausführungsbeispiel neben der Transportkette 23 geeignete Sensormittel 26 angeordnet, die auf die Markierung 25 ansprechen. Es kann sich hierbei um eine berührungslose Sensortechnik handeln. Als Markierung 25 kann beispielsweise ein Permanentmagnet, ein Schaltnocken, oder dergleichen herangezogen werden.

Die Markierung 25 befindet sich zweckmäßigerweise an einem Transportkettenabschnitt 18a, der bei jedem eingestellten Kettenverlauf einen Bestandteil der Transportkette 23 bildet.

Insbesondere wenn abweichend vom Ausführungsbeispiel unterschiedliche Umrüstpositionen der Transportkette 23 für verschiedene Kurvenverlaufsänderungen vorgesehen werden, kann die Transportkettenanordnung 8 auch mit mehreren Markierungen 25 ausgerüstet sein, die sich dann auch an unterschiedlichen Transportkettenabschnitten befinden können, welche zumindest teilweise bei einem eingestellten Kurvenverlauf auch stillgelegt sein können.

Die Figuren 7 bis 9 zeigen exemplarisch verschiedene der beim Ausführungsbeispiel möglichen Umrüstvarianten bei konstanter Umrüstposition der Transportkette 23.

Die Figur 7 illustriert die Vorgänge bei der Umrüstung von der Variante "A" (Figur 1) auf die Variante "B" (Figur 4). Bei dieser Umrüstung werden die in der Variante "A" noch aktiv an der Transportkette 23 beteiligten Transportkettenabschnitte 18b, 18d und 18f stillgelegt. Zur Verdeutlichung sind diese stillgelegten Transportkettenabschnitte mit dünneren Linien dargestellt.

Die stillgelegten Transportkettenabschnitte 18b, 18d und 18f sind vor der Stilllegung an den Kupplungsstellen 27 unter Verwendung der oben erwähnten Kupplungsmittel 22 in die Transportkette 23 eingegliedert. Für die Umrüstung werden die Kupplungsmittel 22 geöffnet, sodass die bis dahin an den Kupplungsstellen 27 miteinander verbundenen Endbereiche der Transportkettenabschnitte voneinander getrennt sind und durch Verändern ihrer Lage in die Nähe des Endbereiches eines anderen Transportkettenabschnittes verbracht werden können, um dort unter Verwendung von Kupplungsmitteln 22 eine neue Verknüpfungsreihenfolge von Transportkettenabschnitten hervorzurufen.

Durch Pfeile 28 ist angedeutet, wie bis zur Umrüstung noch mit einem anderen Transportkettenabschnitt gekuppelte, gestrichelt angedeutete Endabschnitte 32, 33 nach dem Öffnen der Kupplungsmittel 27, beispielsweise durch Verschwenken, so in ihrer Lage veränderbar sind, dass sie nun jeweils einem Endabschnitt 33, 32 eines anderen Transportkettenabschnittes benachbart sind und durch Kupplungsmittel 22 mit diesem verknüpft werden können.

Ersichtlich erfolgt die Einteilung der Transportkettenabschnitte 18a-18f, und insbesondere die Auswahl deren jeweiliger Länge, in einer Weise, dass nach dem Verlagern der entkuppelten Endbereiche wiederum Zuordnungen vorliegen, bei denen sich die neu zu verknüpfenden Endbereiche in unmittelbarer Nähe zueinander befinden, sodass nur noch die Kupplungsmittel 22 aktiviert werden müssen.

Aus der Zeichnung ist ersichtlich, dass die in ihrer Lage veränderten Endbereiche der Transportkettenabschnitte nach der Umrüstung eine andere Ausrichtung haben als vor der Lageänderung.

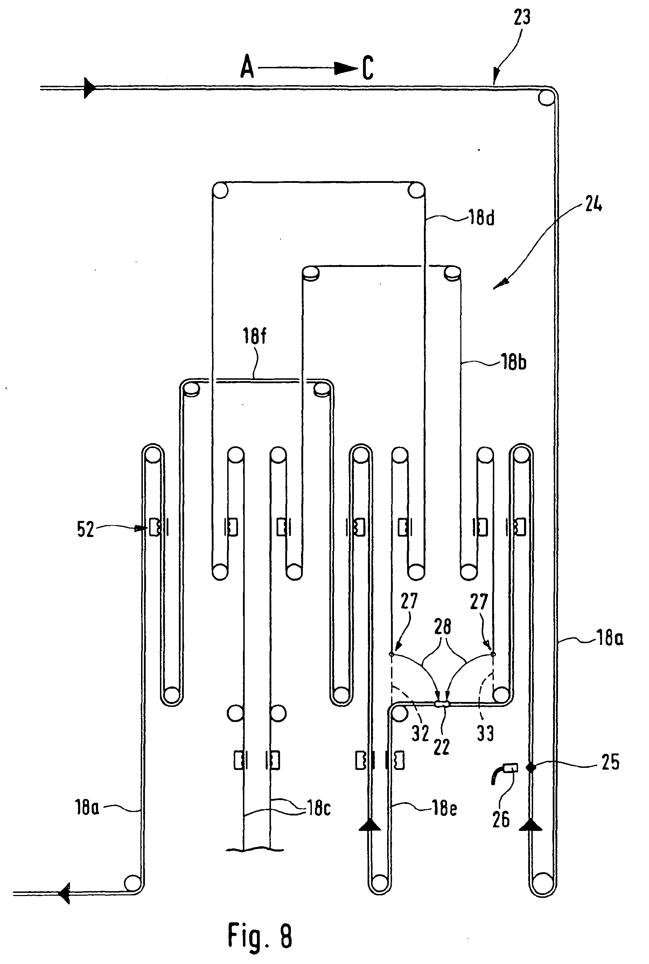

Während bei der Umrüstung gemäß Figur 7 sämtliche Kupplungsmittel 27 beteiligt sind, beschränken sich die bei der in Figur 8 gezeigten Umrüstung von Variante "A" (Figur 1) auf Variante "C" (Figur 5) stattfindenden Manipulationen auf die beiden Kupplungsmittel 27, die in der Variante "A" die Transportkettenabschnitte 18a und 18b, sowie die Transportkettenabschnitte 18e und 18d miteinander verbunden haben. Die hierbei gelösten Endbereiche der Transportkettenabschnitte 18a und 18e werden durch Kupplungsmittel 22 direkt miteinander verbunden, sodass sich eine verkürzte Transportkette 23 ergibt, die sich nun nicht mehr durch die Offsetdruckstation "OS" erstreckt.

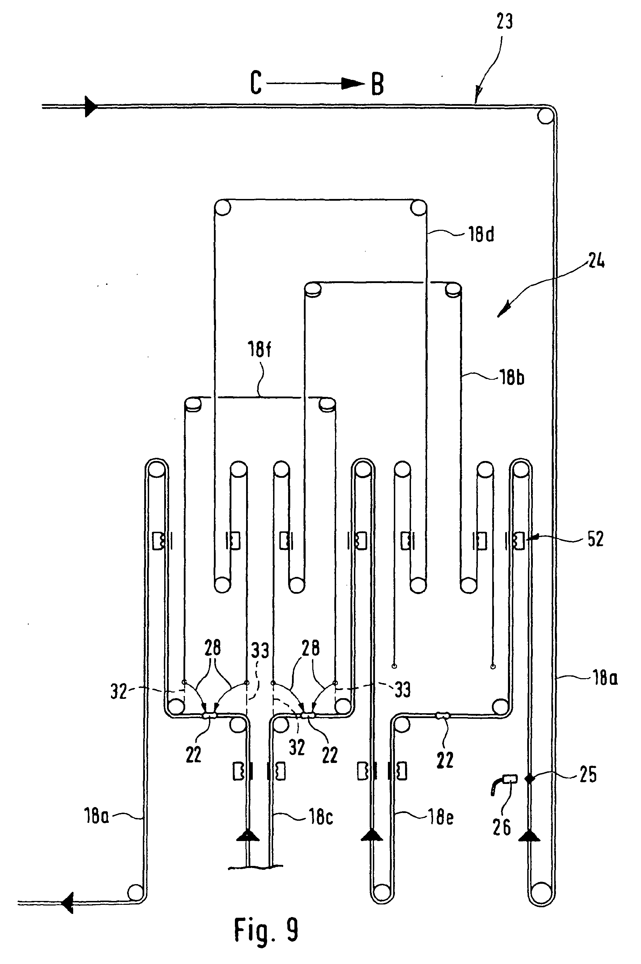

Die Figur 9 macht deutlich, dass Umrüstungen innerhalb der verschiednen Varianten ausgehend von jeder Variante in jede Variante möglich sind. Gezeigt ist hier die Umrüstung von Variante "C" (Figur 5) auf die Variante "B" (Figur 4), wobei hier die Offsetdruckstation "OS" wieder in den Kettenverlauf einbezogen wird.

Zur Gewährleistung der beim Ausführungsbeispiel vorhandenen vielfältigen Gestaltungsmöglichkeiten ist die Transportkettenanordnung 8 insgesamt so ausgeführt, dass sie über mehrere sich kreuzend unter horizontalem Versatz aneinander vorbeigeführte Ketten-Längenabschnitte 34, 35, 36 verfügt. Die Anzahl der zueinander versetzten Ketten-Längenabschnitte 34, 35, 36 entspricht zweckmäßigerweise der Anzahl der von der Transportkettenanordnung 8 erfassten und zu variierenden Arbeitsstationen 4, beim Ausführungsbeispiel mithin drei Stück.

Besonders deutlich wird diese Anordnung unter anderem in Verbindung mit der Figur 3. Dort ist zu erkennen, dass die Transportkettenanordnung 8 einen Hauptbestandteil 3.7 aufweist, der sich durch sämtliche Arbeitsstationen 4 sowie die Produkt-Einlaufstation 5 und die Produkt-Auslaufstation 6 hindurch erstreckt und der zweckmäßigerweise auch den Trockner 17 sowie den Ketten-Rücklaufstrang 38 - d.h. die Rücklaufverbindung zwischen Produkt-Einlaufstation 5 und Produkt-Auslaufstation 6 - beinhaltet. Dieser Bestandteil der Transportkettenanordnung 8 verläuft in einer in Figur 3 identifizierten aufrechten Hauptebene 42, von der die Hohlkörperträger 14 rechtwinkelig abstehen. Damit die Hohlkörperträger 14 leicht nach rückwärts geneigt sind und sich eine stabile Aufhängung der aufgesteckten Hohlkörper 20 einstellt, ist die Hauptebene 42 zweckmäßigerweise bezüglich einer vertikalebene leicht geneigt.

Zu dem in der Hauptebene 42 verlaufenden Hauptbestandteil 37 gehört auch der in der Umrüstzone 24 verlaufende Transportkettenabschnitt 18d, der den ersten (34) der sich kreuzenden Ketten-Längenabschnitte bildet.

Zusätzlich zu dem Hauptbestandteil 37 verfügt die Transportkettenanordnung 8 beim Ausführungsbeispiel noch über zwei weitere, neben der Hauptebene 42 verlaufende Bestandteile, die, weil sie den Hauptbestandteil teilweise praktisch umgehen, als Umgehungsbestandteile 43, 44 bezeichnet seien. Der erste Umgehungsbestandteil 43 ist von dem Transportkettenabschnitt 18b gebildet, der zweite Umgehungsbestandteil 44 von dem Transportkettenabschnitt 18f.

Wie man in der Zeichnung erkennt, sind die beiden Umgehungsbestandteile 43, 44 so aus der Hauptebene 42 ausgebogen, dass sie wenigstens teilweise in zur Hauptebene 42 versetzten Ebenen verlaufen und in der Lage sind, zum Hauptbestandteil 37 gehörende Kettenabschnitte mit Versatz ohne Kollision zu passieren und zu kreuzen.

Somit ist eine Anordnung möglich, bei der der vom Transportkettenabschnitt 18d gebildete erste Ketten-Längenabschnitt 34 von einem zweiten Ketten-Längenabschnitt 35 mit horizontalem Versatz passiert wird, der zu dem Transportkettenabschnitt 18b und somit gleichzeitig zu dem ersten Umgehungsbestandteil 43 gehört. Gleichzeitig kann ein zum Transportkettenabschnitt 18f und mithin zum zweiten Umgehungsbestandteil 44 gehörender dritter Ketten-Längenabschnitt 36 ebenfalls versetzt zur Hauptebene 42 und bei Bedarf auch mit Versatz zum ersten Umgehungsbestandteil 43 vorbeilaufen.

Zum Auslenken der Umgehungsbestandteile 43, 44 aus der Hauptebene 42 werden die entsprechenden Ketten-Längenabschnitte 35, 36 durch in der Zeichnung nur schematisch angedeutete ortsfeste Führungsschienen 45 entlang eines relativ großen Radius zu dem gewünschten Verlauf gezwungen. Dabei wird ausgenutzt, dass die Kettenglieder 12 in ihren Gelenkbereichen 46 ein geringfügiges Spiel aufweisen, welches eine leichte Schrägstellung zwischen in Transportrichtung 16 aufeinanderfolgenden Kettengliedern 12 ermöglicht, wobei benachbarte Kettenglieder 12 jeweils um eine gedankliche Achse 47 abgebogen werden, die horizontal und parallel zu der Hauptebene 42 verläuft. Die Kettenglieder 12 werden dabei praktisch "über den Rücken gebogen".

Im Anschluss an den gewünschten Kreuzungsbereich wird der ausgelenkte Umgehungsbestandteil 43, 44 wieder in die Hauptebene 42 zurückgeführt, sodass mögliche Zonen erhöhter Beanspruchung auf ein Minimum reduziert sind.

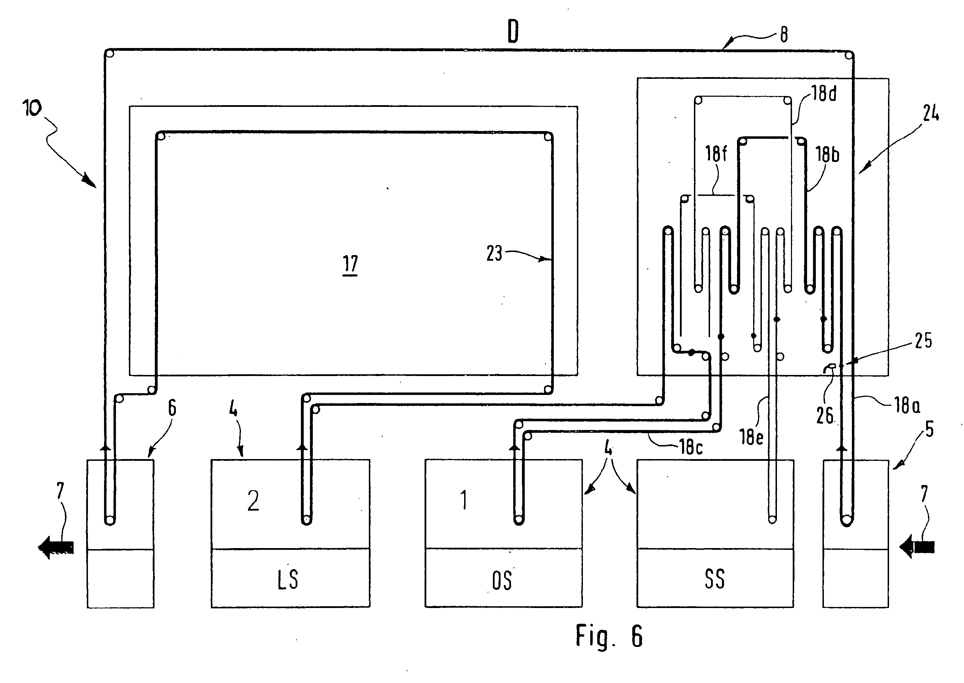

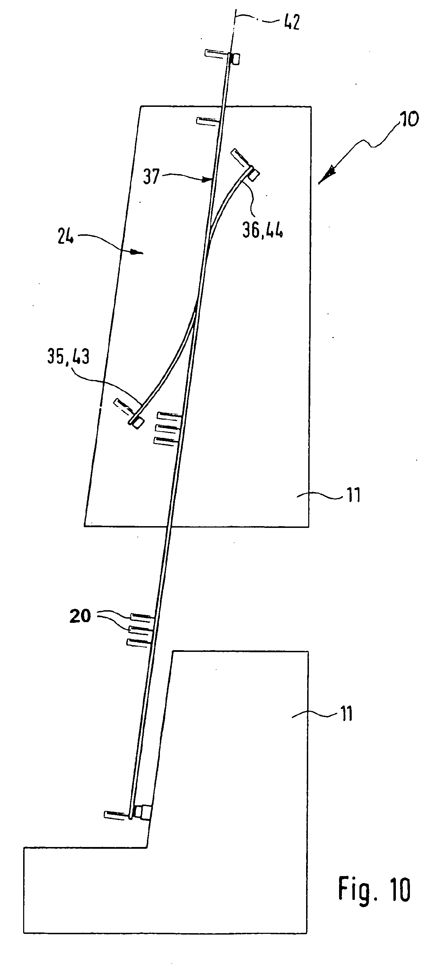

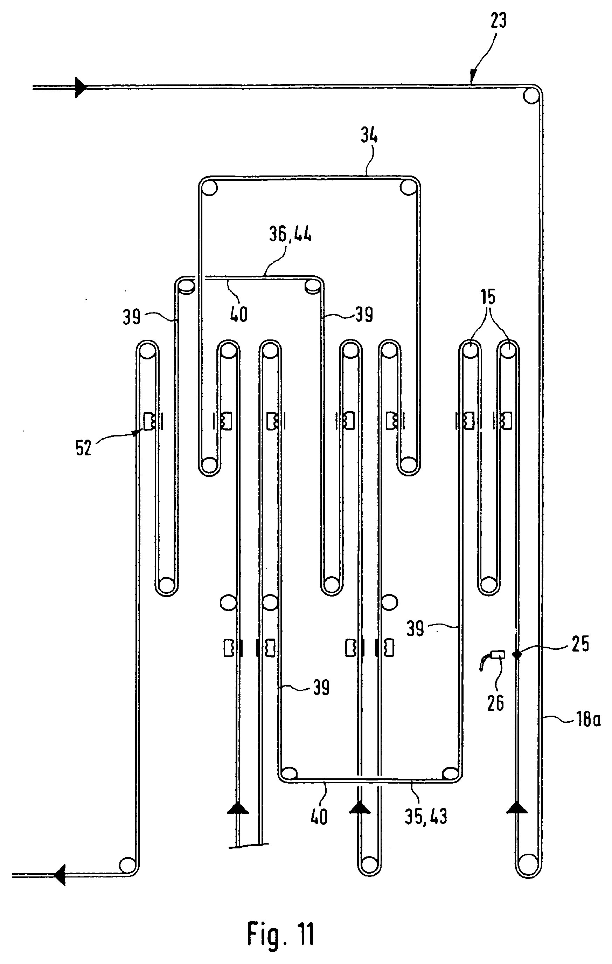

Bei dem Ausführungsbeispiel der Figuren 1 bis 9 befinden sich beide Umgehungsbestandteile 43, 44 auf der gleichen Seite der Hauptebene 42. Sie liegen beide beispielsweise hinter dieser Hauptebene 42. Aus den Figuren 10 und 11 wird jedoch deutlich, dass auch eine Konstellation möglich ist, bei der ein Umgehungsbestandteil 44 hinter und ein anderer Umgehungsbestandteil 43 vor der Hauptebene 42 verläuft. Es finden sich also Umgehungsbestandteile 43, 44 zu beiden Seiten der Hauptebene 42, was unter Umständen die Zugänglichkeit zu den einzelnen Komponenten erleichtern kann

Während beim Ausführungsbeispiel der Figuren 1 bis 9 die Kreuzung der in der Hauptebene 42 liegenden Transportkettenabschnitte über oben liegende Ketten-Längenabschnitte 35, 36 der beiden Umgehungsbestandteile 43, 44 stattfindet, erfolgt im Falle der Figuren 10 und 11 die entsprechende Kettenkreuzung über einen nach unten geführten zweiten Ketten-Längenabschnitt 35 des ersten Umgehungsbestandteils 43 sowie einen nach oben geführten dritten Ketten-Längenabschnitt 36 des zweiten Umgehungsbestandteiles 44.

Bevorzugt hat die Transportkettenanordnung 8 im Bereich der beiden Umgehungsbestandteile 43, 44 jeweils einen U-förmigen Verlauf, wobei im Falle der Figuren 1 bis 9 sämtliche U-Öffnungen nach unten weisen, während gemäß Figuren 10 und 11 die U-Öffnung des den oben liegenden Ketten-Längenabschnitt 36 bildenden Umgehungsbestandteils 44 nach unten und diejenige des den unten liegenden Ketten-Längenabschnitt 35 bildenden Umgehungsbestandteils 43 nach oben weist. Die den U-Schenkeln entsprechenden vertikalen Kettenstrangabschnitte 39 sind diejenigen Bestandteile, die aus der Hauptebene 42 herausführen, wobei die dem U-Verbindungssteg entsprechenden horizontalen Längenabschnitte 40 unter Kreuzung vertikaler Längenabschnitte anderer Kettenbestandteile parallel zur Hauptebene 42 verlaufen. Diese Anordnung wird unter anderem auch durch die Figur 2 gut verdeutlicht.

Aus Figuren 2, 7 bis 9 und 11 gehen zweckmäßigerweise vorhandene, der Transportkettenanordnung 8 zugeordnete Kettenhalter 52 hervor. Diese Kettenhalter 52 ermöglichen es, die einzelnen Transportkettenabschnitte 18a bis 18f zumindest während der Umrüstung auf einen anderen Kettenverlauf in lösbarer Weise unverfahrbar festzusetzen. Die Betätigung der Kettenhalter 52 erfolgt zweckmäßigerweise elektrisch oder durch Fluidkraft.

Durch den Einsatz der Kettenhalter 52 wird die Handhabung der Transportkettenabschnitte 18a bis 18f bei der Umrüstung vereinfacht, weil verhindert wird, dass voneinander entkoppelte Transportkettenabschnitte sich auf Grund der Gewichtskraft selbsttätig von einem oder mehreren der vorhandenen Umlenkräder 15 abwickeln. Dies gilt im Übrigen auch für den Fall, dass die Kettenhalter 52 eingesetzt werden, um einen abgekoppelten, stillgelegten Transportkettenabschnitt während der Stilllegungsphase ortsfest zu fixieren.

Durch die Kettenhalter 52 ist bevorzugt eine klemmende Beaufschlagung des jeweils festzusetzenden Transportkettenabschnittes 18a bis 18f möglich. Wie in der Ausschnittsvergrößerung der Figur 7 dargestellt ist, kann der Kettenhalter 52 mindestens einen Klemmbacken 53 aufweisen, der im aktivierten Zustand formschlüssig in die benachbarten Kettenglieder 12 eingreift und gleichzeitig gegen ein z.B. als Gleitfläche ausgebildetes Widerlager 54 drückt.

Die Aktivierung der Kettenhalter 52 geschieht bevorzugt elektronisch gesteuert in Verbindung mit dem Positionieren der Transportkette 23 in der Umrüstposition. Die Steuerung der Anlage 10 kann so ausgelegt werden, dass sich die gewünschte Kettenverlaufsvariante vorwählen lässt und dementsprechend die in diesem Zusammenhang benötigten Kettenhalter 52 vorübergehend oder für die Dauer einer Stillstandsphase aktiviert werden.

Für den Normalbetrieb bedarf es einer gewissen Vorspannung der Transportkette 23. Diese wird durch eine in Figur 1 schematisch angedeutete, beispielsweise elektrisch, pneumatisch oder hydraulisch aktivierbare Spanneinrichtung 55 aufgebracht. Zum Umrüsten der Transportkette 23 auf einen anderen Verlauf kann die Spanneinrichtung 55 so betätigt werden, dass die Kettenspannung vorübergehend herabgesetzt ist, was die Manipulationen, insbesondere an den Kupplungsmitteln 22, sehr erleichtert.

## Patentansprüche

1. Anlage zum Bedrucken und/oder sonstigen Dekorieren von Hohlkörpern (20) wie Hülsen, Tuben, Dosen oder dergleichen, mit mehreren Arbeitsstationen (4) unterschiedlichen Typs, die ausgebildet sind, um an ihnen zugeführten Hohlkörpern (20) unterschiedliche Bearbeitungsvorgänge auszuführen, und mit einer die einzelnen Arbeitsstationen (4) erfassenden, für den Transport von Hohlkörpern (20) ausgelegten Transportkettenanordnung (8), die aus mehreren in der Anlage (1) befindlichen Transportkettenabschnitten (18a-18f) besteht, **dadurch gekennzeichnet, dass** die Transportkettenanordnung (8) Kupplungsmittel (22) umfasst, durch die die Transportkettenabschnitte (18a-18f) zu einer in sich geschlossenen und im Betrieb eine Umlaufbewegung (16) ausführenden Transportkette (23) mit alternativ unterschiedlichen Verläufen verknüpfbar sind, in denen die Arbeitsstationen (4) von der Transportkette (23) in unterschiedlicher Reihenfolge und/oder teilweise überhaupt nicht durchlaufen werden.

2. Anlage nach Anspruch 1, **dadurch gekennzeichnet, dass** es sich bei den von der Transportkettenanordnung (8) erfassten Arbeitsstationen (4) um mindestens eine Siebdruckstation (SS) und/oder mindestens eine Offsetdruckstation (OS) und/oder mindestens eine Lackierstation (LS) handelt.

3. Anlage nach Anspruch 1 oder 2, **dadurch gekennzeichnet, dass** die Transportkettenanordnung (8) einen Kettenstrang (13) mit daran in Stranglängsrichtung verteilt angeordneten, zur lösbaren Bestückung mit Hohlkörpern (20) ausgebildeten Hohlkörperträgern (14) aufweist.

4. Anlage nach Anspruch 3, **dadurch gekennzeichnet, dass** die Hohlkörperträger (14) über vom Kettenstrang (13) wegragende Stabstrukturen verfügen.

5. Anlage nach einem der Ansprüche 1 bis 4, **dadurch gekennzeichnet, dass** die Kupplungsmittel (22) von Kettenschlössern gebildet sind.

6. Anlage nach einem der Ansprüche 1 bis 5, **dadurch gekennzeichnet, dass** die Transportkettenanordnung (8) über mehrere sich kreuzend unter horizontalem Versatz aneinander vorbeigeführte Ketten-Längenabschnitte (34, 35, 36) verfügt.

7. Anlage nach Anspruch 6, **dadurch gekennzeichnet, dass** die Anzahl der zueinander versetzten Ketten-Längenabschnitte (34, 35, 36) der Transportkettenanordnung (8) der Anzahl an von ihr erfassten und hinsichtlich der Beschickung zu variierenden Arbeitsstationen (4) entspricht.

8. Anlage nach einem der Ansprüche 1 bis 7, **dadurch gekennzeichnet, dass** die Transportkettenanordnung (8) mit einem sämtliche Arbeitsstationen (4) erfassenden Hauptbestandteil in einer aufrechten, gegenüber der vertikalen zweckmäßigerweise leicht geneigten Hauptebene (42) verläuft und wenigstens einen aus der Hauptebene (42) ausgelenkten und neben der Hauptebene (42) verlaufenden Umgehungsbestandteil (43, 44) enthält.

9. Anlage nach Anspruch 8, **gekennzeichnet durch** mehrere quer zur Hauptebene (42) versetzt zueinander verlaufende Umgehungsbestandteile (43, 44) der Transportkettenanordnung (8).

10. Anlage nach Anspruch 9, **dadurch gekennzeichnet, dass** mehrere Umgehungsbestandteile (43, 44) auf der gleichen Seite der Hauptebene (42) und/oder auf einander entgegengesetzten Seiten der Hauptebene (42) verlaufen.

11. Anlage nach einem der Ansprüche 8 bis 10, **dadurch gekennzeichnet, dass** der Ketten-Längenabschnitt (35, 36) des mindestens einen Umgehungsbestandteils (43, 44) mindestens einen Ketten-Längenabschnitt (34) des Hauptbestandteils (37) mit horizontalem Versatz kreuzt.

12. Anlage nach einem der Ansprüche 8 bis 11, **dadurch gekennzeichnet, dass** der Ketten-Längenabschnitt (35, 36) des mindestens einen Umgehungsbestandteils (43, 44) durch mindestens eine Führungsschiene (45) zu dem bezüglich der Hauptebene (42) ausgelenkten bogenförmigen Verlauf gezwungen ist.

13. Anlage nach einem der Ansprüche 1 bis 12, **dadurch gekennzeichnet, dass** bei mindestens einem Verlauf der Transportkette (23) sämtliche Transportkettenabschnitte (18a-18f) der Transportkettenanordnung (8) miteinander verknüpft sind.

14. Anlage nach einem der Ansprüche 1 bis 13, **dadurch gekennzeichnet, dass** bei mindestens einem Verlauf der Transportkette (23) mindestens ein Transportkettenabschnitt abgekoppelt und unter Verbleib in der Anlage (1) betriebsmäßig stillgelegt ist.

15. Anlage nach einem der Ansprüche 1 bis 14, **dadurch gekennzeichnet, dass** die Transportkette (23) in mindestens eine Umrüstposition verfahrbar ist, in der die Endbereiche (32 33) mehrerer Transportkettenabschnitte (18) so zu liegen kommen, dass sie nach dem Öffnen der ihnen zugeordneten Kupplungsmittel (22) durch, insbesondere manuelles, Verändern ihrer Lage in die Nähe des Endbereiches (33, 32) eines anderen Transportkettenabschnittes verlagerbar und mit diesem zum Erhalt eines anderen Kettenverlaufes kuppelbar sind.

16. Anlage nach Anspruch 15, **dadurch gekennzeichnet, dass** der in seiner Lage veränderte Endbereich (32, 33) eines Transportkettenabschnittes eine andere Ausrichtung als vor der Lageänderung besitzt.

17. Anlage nach Anspruch 15 oder 16, **dadurch gekennzeichnet, dass** die Transportkette (23) mindestens eine Markierung (25) aufweist, die zum Erhalt der Umrüstposition durch entsprechendes Verfahren der Transportkette (23) in eine vorbestimmte Arbeitsposition verbringbar ist.

18. Anlage nach Anspruch 17, **gekennzeichnet durch** Sensormittel (26) zur Erfassung der in der Arbeitsposition angelangten Markierung (25).

19. Anlage nach einem der Ansprüche 15 bis 18, **dadurch gekennzeichnet, dass** mindestens ein Transportkettenabschnitt (18a) bei jedem eingestellten Kettenverlauf der Transportkette (23) ein Bestandteil der Transportkette (23) ist, wobei zweckmäßigerweise die Umrüstposition der Transportkette (23) für alle Kettenverlaufsänderungen bei gleicher Stellung des ständig zur Transportkette (23) gehörenden Transportkettenabschnittes (18a) vorliegt.

20. Anlage nach einem der Ansprüche 15 bis 19, **dadurch gekennzeichnet, dass** in der Umrüstposition der Transportkette (23) sämtliche für eine Kettenverlaufsänderung vorgesehenen Kupplungsmittel (22) in einer Umrüstzone (24) der Anlage (1) konzentriert sind.

21. Anlage nach einem der Ansprüche 1 bis 20, **dadurch gekennzeichnet, dass** der Transportkettenanordnung (8) mehrere Kettenhalter (52) zugeordnet sind, durch die einzelne Transportkettenabschnitte (18a-18f) während der Umrüstung auf einen anderen Kettenverlauf unverfahrbar festsetzbar sind.

22. Anlage nach Anspruch 21, **dadurch gekennzeichnet, dass** durch mindestens einen Kettenhalter (52) ein lösbares Festsetzen eines stillgelegten Transportkettenabschnittes während der Stilllegungsdauer möglich ist.

23. Anlage nach Anspruch 21 oder 22, **dadurch gekennzeichnet, dass** mindestens ein Kettenhalter (52) zur klemmenden Beaufschlagung des festzusetzenden Transportkettenabschnittes ausgebildet ist.

24. Anlage nach einem der Ansprüche 1 bis 23, **gekennzeichnet durch** eine zum Spannen der Transportkette (23) dienende Spanneinrichtung (55), die ein Herabsetzen der Kettenspannung während der Änderung des Kettenverlaufes ermöglicht.

## Claims

1. System for printing on and/or otherwise decorating hollow bodies (20), such as sleeves, tubes, tins or similar objects, with a plurality of workstations (4) of different types designed for performing different processes on the hollow bodies (20) delivered to them, and with a chain carrier arrangement (8) covering the individual workstations (4) and designed for conveying hollow bodies (20), which comprises a plurality of chain carrier sections (18a - 18f) located in the system (1), **characterised in that** the chain carrier arrangement (8) comprises coupling means (22), by means of which the chain carrier sections (18a - 18f) can be coupled to form a self contained chain carrier (23) performing an orbital movement (16) in operation with different alternative routes, wherein the chain carrier (23) passes through the workstations (4) in different sequences and/or not at all through some of them.

2. System according to claim 1, **characterised in that** the workstations (4) covered by the chain carrier arrangement (8) include at least one screen printing station (SS) and/or at least one offset printing station (OS) and/or at least one painting station (LS).

3. System according to claim 1 or 2, **characterised in that** the chain carrier arrangement (8) comprises a chain run (13) with hollow body carriers (14) distributed in its longitudinal direction for the releasable mounting of hollow bodies (20).

4. System according to claim 3, **characterised in that** the hollow body carriers (14) have a bar structure projecting from the chain run (13).

5. System according to any of claims 1 to 4, **characterised in that** the coupling means (22) are represented by chain connecting links.

6. System according to any of claims 1 to 5, **characterised in that** the chain carrier arrangement (8) comprises a plurality of chain length sections (34, 35, 36) guided past one another while crossing one another with horizontal offset.

7. System according to claim 6, **characterised in that** the number of mutually offset chain length sections (34, 35, 36) corresponds to the number of workstations (4) covered and to be varied with respect to loading.

8. System according to any of claims 1 to 7, **characterised in that** the chain carrier arrangement (8), with a main section which covers all the workstations (4), runs in an upright main plane (42), which is expediently inclined slightly relative to the vertical, and **in that** it comprises at least one bypass section (43, 44) deflected from the main plane (42) and running adjacent to the main plane (42).

9. System according to claim 8, **characterised by** a plurality of bypass sections (43, 44) of the chain carrier arrangement (8), which are offset relative to one another.

10. System according to claim 9, **characterised in that** a plurality of bypass sections (43, 44) runs on the same side of the main plane (42) and/or on opposite sides of the main plane (42).

11. System according to any of claims 8 to 10, **characterised in that** the chain length section (35, 36) of the at least one bypass section (43, 44) crosses at least one chain length section (34) of the main section (42) with horizontal offset.

12. System according to any of claims 8 to 11, **characterised in that** the chain length section (35, 36) of the at least one bypass section (43, 44) is forced to run along an arc deflected relative to the main plane (42) by at least one guide rail (45).

13. System according to any of claims 1 to 12, **characterised in that** in at least one route of the chain carrier (23) all chain carrier sections (18a - 18f) of the chain carrier arrangement (8) are linked to one another.

14. System according to any of claims 1 to 13, **characterised in that** in at least one route of the chain carrier (23) at least one chain carrier section is uncoupled and non-operational while remaining in the system.

15. System according to any of claims 1 to 14, **characterised in that** the chain carrier (23) can be moved to at least one change-over position wherein the end areas (32, 33) of a plurality of chain carrier sections (18) come to lie such that they can, following the opening of the relevant coupling means (22), be moved, by in particular manual re-positioning, near the end area (33, 32) of another chain carrier section and coupled thereto to establish another chain route.

16. System according to claim 15, **characterised in that** the re-positioned end area (32, 33) of a chain carrier section has an alignment which differs from that prior to re-positioning.

17. System according to claim 15 or 16, **characterised in that** the chain carrier (23) has at least one marking (25), which can be moved to a predetermined working position by suitable traversing of the chain carrier (23) to obtain the change-over position.

18. System according to claim 17, **characterised by** sensor means (26) for the detection of the arrival of the marking (25) in the working position.

19. System according to any of claims 15 to 18, **characterised in that** at least one chain carrier section (18a) is a part of the chain carrier (23) at any set chain route of the chain carrier (23), the change-over position of the chain carrier (23) being expediently available at the same position of the chain carrier section (18a) forming a permanent part of the chain carrier (23) for all chain route changes.

20. System according to any of claims 15 to 19, **characterised in that**, in the change-over position of the chain carrier (23), all coupling means (22) provided for a chain route change are concentrated in a change-over zone (24) of the system (1).

21. System according to any of claims 1 to 20, **characterised in that** a plurality of chain holders (52) is assigned to the chain carrier arrangement (8), by means of which the individual chain carrier sections (18a- 18f) can be immovably located during the change-over to another chain route.

22. System according to claim 21, **characterised in that** an inoperative chain carrier section can be releasably immobilised by at least one chain holder (52) in its inoperative period.

23. System according to claim 21 or 22, **characterised in that** at least one chain holder (52) is designed for clamping the chain carrier section to be immobilised.

24. System according to any of claims 1 to 23, **characterised by** a tensioning device (55) for tensioning the chain carrier (23), which allows the chain tension to be reduced while the chain route is changed.

## Revendications

1. Installation d'impression et/ou de décoration autre de corps creux (20) tels que des manchons, des tubes, des boîtes ou similaires, avec plusieurs stations de travail (4) de différents types, qui sont configurées pour réaliser différents procédés d'usinage sur les corps creux (20) qui leur sont amenés, et avec un dispositif de chaîne de transport (8) conçu pour le transport des corps creux (20), détectant les différentes stations de travail (4), lequel dispositif est composé de plusieurs sections de chaînes de transport (18a-18f) se trouvant dans l'installation (1), **caractérisée en ce que** le dispositif de chaîne de transport (8) comprend des moyens d'accouplement (22) qui permettent de relier les sections de chaîne de transport (18a-18f) à des parcours alternativement différents vers une chaîne de transport (23) fermée et réalisant un mouvement circulaire (16) pendant le fonctionnement, dans lesquels les stations de travail (4) ne sont pas parcourues par la chaîne de transport (23) dans un ordre différent et/ou ne le sont pas partiellement.

2. Installation selon la revendication 1, **caractérisée en ce qu'**il s'agit du point de vue des stations de travail (4) détectées par le dispositif de chaîne de transport (8) d'au moins une station de sérigraphie (SS) et/ou d'au moins une station d'impression offset (OS) et/ou d'au moins une station d'enduction (LS).

3. Installation selon la revendication 1 ou 2, **caractérisée en ce que** le dispositif de chaîne de transport (8) comprend un tronçon de chaîne (13) avec des supports de corps creux (14) répartis dans le sens longitudinal du tronçon, conçus pour l'équipement amovible de corps creux (20).

4. Installation selon la revendication 3, **caractérisée en ce que** les supports de corps creux (14) disposent de structures de tiges qui ressortent du tronçon de chaîne (1 3).

5. Installation selon une des revendications 1 à 4, **caractérisée en ce que** les moyens d'accouplement (22) sont formés par des faux maillons.

6. Installation selon une des revendications 1 à 5, **caractérisée en ce que** le dispositif de chaîne de transport (8) dispose de plusieurs sections longitudinales de chaîne (34, 35, 36) qui se croisent les unes les autres avec un déport horizontal.

7. Installation selon la revendication 6, **caractérisée en ce que** le nombre de sections longitudinales de chaîne (34, 35, 36) décalées les unes par rapport aux autres du dispositif de chaîne de transport (8) correspond au nombre de stations de travail (4) détectées par celui-ci et devant être modifiées en fonction du chargement.

8. Installation selon une des revendications 1 à 7, **caractérisée en ce que** le dispositif de chaîne de transport (8) s'étend avec un composant principal détectant toutes les stations de travail (4) dans un plan principal (42) légèrement incliné de façon appropriée par rapport à la verticale, et contient au moins un composant de dérivation (43, 44) dévié du plan principal (42) et s'étendant à côté du plan principal (42).

9. Installation selon la revendication 8, **caractérisée par** plusieurs composants de dérivation (43, 44) du dispositif de chaîne de transport (8) décalés les uns par rapport aux autres transversalement au plan principal (42).

10. Installation selon la revendication 9, **caractérisée en ce que** plusieurs composants de dérivation (43, 44) s'étendent sur le même côté du plan principal (42) et/ou sur des côtés opposés du plan principal (42).

11. Installation selon une des revendications 8 à 10, **caractérisée en ce que** la section longitudinale de chaîne (35, 36) d'au moins un composant de dérivation (43, 44) croise au moins une section longitudinale de chaîne (34) du composant principal (37) avec un déport horizontal.

12. Installation selon une des revendications 8 à 11, **caractérisée en ce que** la section longitudinale de chaîne (35, 36) d'au moins un composant de dérivation (43, 44) est contrainte par au moins un rail de guidage (45) vers le parcours arqué dévié par rapport au plan principal (42).

13. Installation selon une des revendications 1 à 12, **caractérisée en ce que**, lors d'au moins un parcours de la chaîne de transport (23) toutes les sections de chaîne de transport (18a-18f) du dispositif de chaîne de transport (8) sont reliées entre elles.

14. Installation selon une des revendications 1 à 13, **caractérisée en ce que**, lors d'au moins un parcours de la chaîne de transport (23), au moins une section de chaîne de transport est désolidarisée et est mise hors service fonctionnellement tout en demeurant dans l'installation (1).

15. Installation selon une des revendications 1 à 14, **caractérisée en ce que** la chaîne de transport (23) est mobile dans au moins une position de préparation dans laquelle les zones d'extrémité (32, 33) de plusieurs sections de chaîne de transport (18) viennent se placer de telle sorte qu'elles peuvent être décalées après l'ouverture des moyens d'accouplement (22) qui lui sont associés par le changement, en particulier manuel, de leur position à proximité de la zone d'extrémité (33, 32) d'une autre section de chaîne de transport, et elles peuvent être couplées à celui-ci pour obtenir un autre parcours de chaîne.

16. Installation selon la revendication 15, **caractérisée en ce que** la zone d'extrémité (32, 33) modifiée dans sa position d'une section de chaîne de transport possède une autre orientation que celle précédant le changement de position.

17. Installation selon la revendication 15 ou 16, **caractérisée en ce que** la chaîne de transport (23) comprend au moins un marquage (25) qui permet de passer dans une position de travail prédéfinie pour obtenir la position de préparation par le déplacement correspondant de la chaîne de transport (23).

18. Installation selon la revendication 17, **caractérisée par** des moyens de capteurs (26) pour détecter le marquage (25) qui a atteint la position de travail.

19. Installation selon une des revendications 15 à 18, **caractérisée en ce que** au moins une section de chaîne de transport (1 8a), lorsque chaque parcours de chaîne de la chaîne de transport (23) est réglé, est un composant de la chaîne de transport (23), moyennant quoi à des fins utiles la position de préparation de la chaîne de transport (23), pour toutes les modifications de parcours de chaîne, se trouve dans la même position que celle de la section de chaîne de transport (1 8a) appartenant en permanence à la chaîne de transport (23).

20. Installation selon une des revendications 15 à 19, **caractérisée en ce que** dans la position de préparation de la chaîne de transport (23), tous les moyens d'accouplement (22) prévus pour un changement de parcours de chaîne sont concentrés dans une zone de préparation (24) de l'installation (1).

21. Installation selon une des revendications 1 à 20, **caractérisée en ce que** sont associés au dispositif de chaîne de transport (8) plusieurs supports de chaînes (52) à travers lesquels différentes sections de chaîne de transport (18a-18f) peuvent être fixées pendant la préparation à un autre parcours de chaîne.

22. Installation selon la revendication 21, **caractérisée en ce que** par au moins un support de chaîne (52) une fixation détachable d'une section de chaîne de transport mise à l'arrêt est possible pendant la durée de mise hors service.

23. Installation selon la revendication 21 ou 22, **caractérisée en ce que** au moins un support de chaîne (52) est configuré pour l'alimentation de blocage de la section de chaîne de transport à fixer.

24. Installation selon une des revendications 1 à 23, **caractérisée par** un dispositif de tension (55) destiné au serrage de la chaîne de transport (23) qui permet une diminution de la tension de chaîne pendant le changement de parcours de chaîne.
